# EUROPEAN PATENT APPLICATION

(11) **EP 1 500 359 A1**
(43) Date of publication of application: **26.01.2005**
(21) Application number: 04015473.4
(22) Date of filing: 01.07.2004
(51) Int. Cl.: A47J 31/40, A47J 43/042, B67D 1/00, B01F 7/16

(54) **Mixing device, particularly for beverage dispensing machines**

(30) Priority: 22.07.2003 IT mi20031493
(71) Applicant: Bianchi Vending S.P.A., 24049 Zingonia di Verdellino (IT)
(72) Inventor: Trapletti, Massimo, 24100 Bergamo (IT)
(74) Representative: Forattini, Amelia

(57) **Abstract**

A mixing device (1), particularly for beverage dispensing machines, having a motorized impeller (2) that is contained inside a mixing chamber (3) that is part of an elongated body to be inserted in a cup in order to dispense and mix the beverage, its operation being precise and reliable even after prolonged use.

## Description

The present invention relates to a mixing device particularly for beverage dispensing machines.

It is known that machines for dispensing beverages such as coffee, milk, chocolate et cetera use mixers to mix hot water with the soluble preparation and to whisk the solution, forming on the surface of the beverage a froth that increases the appreciability of the product.

The formation of froth is indispensable in the case of coffee and it is further desirable for the froth to have specific characteristics of density and thickness, so as to make the beverage resemble as closely as possible coffee produced by espresso machines.

In conventional dispensing machines, the beverage is prepared by pouring the soluble preparation simultaneously with the hot water. The hot water and the preparation are mixed inside a common duct, before they reach the cup, by way of an impeller inside a chamber.

After the action of the turbine, the water is poured continuously in order to complete the preparation of the beverage and to wash the duct and the impeller.

Machines of the type described above currently in use require more than one mixing unit, even one for each beverage to be dispensed.

In devices of the type described above, the water is brought to a temperature of approximately 90 degrees, and the vapors that have formed during dispensing tend to rise along the internal ducts up to the dispensers of the products in powder form, moistening them and forming a mix that causes considerable operating and hygiene problems.

Another type of conventional dispensing machine comprises a mixing device constituted by a simple helical member or whisk, which is introduced in the cup, which contains hot water and product in powder form, in order to mix the solution, forming the froth, and is then extracted and washed with hot water, which completes the preparation of the beverage.

This unit forms a froth that is not very creamy and thick and is not suitable for preparing coffee, because it does not produce a froth that is similar to the froth of coffee prepared with espresso machines.

Another conventional machine prepares the soluble beverage by using a mixing system that is constituted by jets of hot water arranged on a movable arm that forms a vortex of water in the cup. This system solves the hygiene problems, but does not solve the problems linked to the formation of froth and to the mixing of powders, because it does not produce a dense froth and generates large bubbles.

The aim of the present invention is to provide a mixing device, particularly for beverage dispensing machines, that overcomes the drawbacks of the cited prior art.

A particular object of the invention is to provide a device that is capable of dispensing a beverage with optimum characteristics of pleasantness to the palate and is at the same time functionally superior.

A further object of the invention is to provide a device that allows to reduce maintenance interventions significantly with respect to conventional machines.

A further object is to provide a device that gives maximum assurances of hygiene.

This aim and these and other objects that will become better apparent hereinafter are achieved by a mixing device, particularly for beverage dispensing machines, characterized in that it comprises a motorized impeller that is contained inside a mixing chamber that is part of an elongated body that is suitable to be inserted in a cup in order to dispense and mix the beverage.

Further characteristics and advantages will become better apparent from the description of preferred but not exclusive embodiments of the invention, illustrated by way of non-limitative example in the accompanying drawings, wherein:
Figure 1 is a sectional front view, taken along a longitudinal plane, of the device according to the invention;
Figure 2 is a sectional front view, taken along a longitudinal plane, of the detail of the impeller of the device according to the invention;
Figure 3 is a sectional view, taken along the plane III-III of Figure 1;

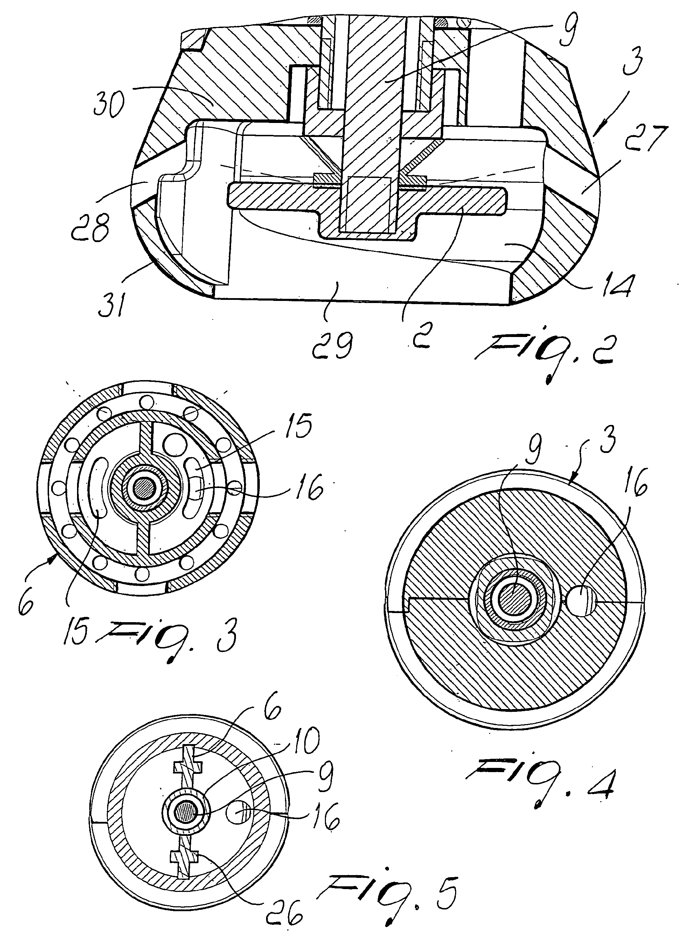

Figure 4 is a sectional view, taken along the plane IV-IV of Figure 1;
Figure 5 is a sectional view, taken along the plane V-V of Figure 1;
Figure 6 is a partial perspective view of the manifold body of the device;

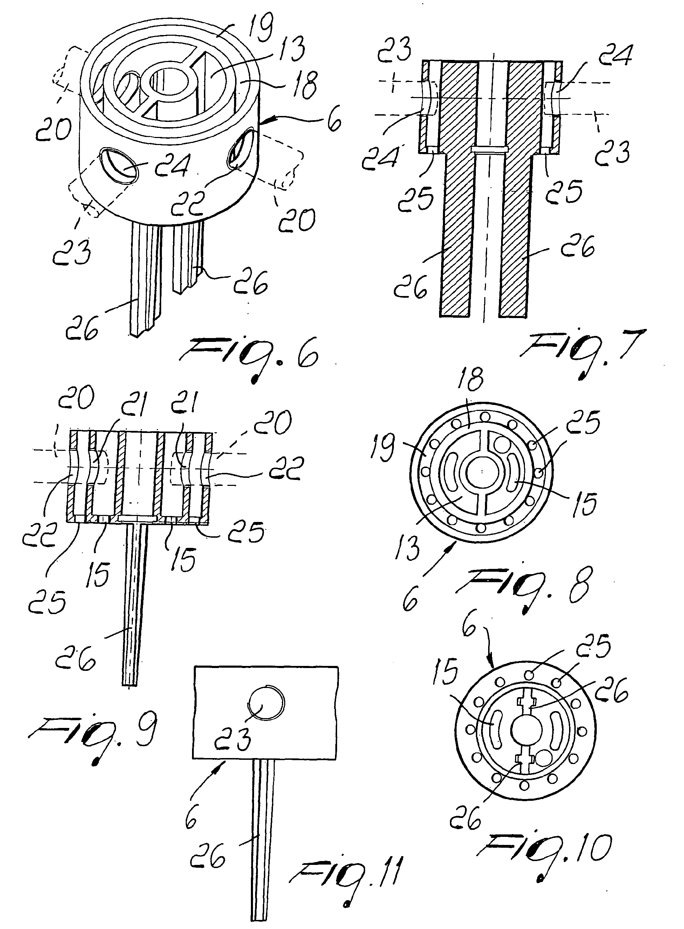

Figure 7 is a sectional front view, taken along a longitudinal plane, of the manifold body of the device;

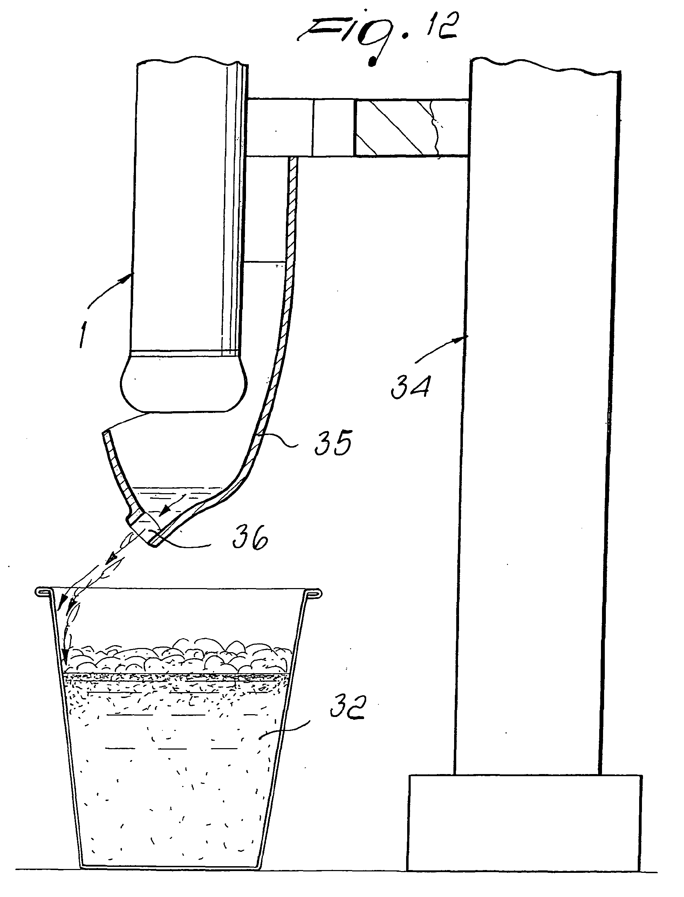

Figure 8 is a plan view of the manifold body of the device;
Figure 9 is a sectional side view, taken at 90° with respect to the view of Figure 7 and along a longitudinal plane, of the manifold body of the device;
Figure 10 is a bottom view of the manifold body of the device;

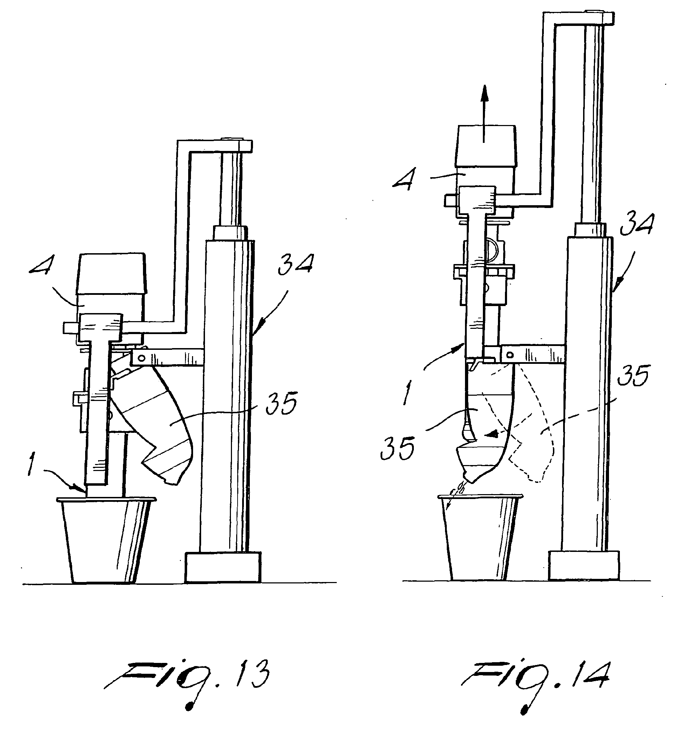

Figure 11 is a side view, taken at 90° with respect to the view of Figure 7, of the manifold body of the device;
Figure 12 is a side view, illustrating schematically the operation of the baffle during washing;
Figure 13 is a side view of the device in the active position during mixing, with the baffle retracted;
Figure 14 is a view, similar to Figure 13, but with the device in the washing position.

With reference to the cited figures, the mixing device according to the invention, generally designated by the reference numeral 1, comprises a motorized impeller 2 contained inside a mixing chamber 3 that is part of an elongated body that comprises a motor 4 and is adapted to be inserted in a cup in order to dispense and mix the beverage, as will become better apparent hereinafter.

The elongated body is constituted by a tubular portion 5, which is provided with the mixing chamber in its lower end and is associated with a manifold body 6, which in turn is rigidly coupled to a tubular support 7 that receives the shaft 8 of the motor 4.

The shaft 8 of the motor 4 meshes with a transmission shaft 9 that is supported inside a hollow support 10 that runs from the manifold 6 to the chamber 3, inside which the transmission shaft 9 is fixed to the impeller 2.

An annular duct 12 is formed between the hollow support 10 and the outer wall 11 of the tubular portion 5 and is connected to an inner annular chamber 13 of the manifold 6.

The inner annular chamber 13 of the manifold 6 is connected to the annular duct 12 by way of longitudinal holes 15, which are formed in the lower wall of the manifold 6.

The impeller cavity 14 is connected, by way of a passage hole 16, to a tube 17 that passes through the annular duct 12. The tube 17 is adapted to send water into the impeller cavity 14.

A cylindrical partition 18 divides the manifold 6 into two chambers: the already-mentioned inner annular chamber 13, and an outer annular chamber 19, which is coaxial to the inner annular chamber 13.

The manifold 6 has two first delivery tubes 20, which are inserted in radial holes 21 and 22 formed in the outer wall of the manifold 6 in order to supply water to the inner annular chamber 13.

The manifold 6 has two second delivery tubes 23, which are inserted in radial holes 24 formed in the outer part of the manifold 6 in order to supply water to the outer annular chamber 19.

The lower wall of the manifold 6 has a plurality of outer longitudinal holes 25, which connect the outer annular chamber 19 to the outer surface of the tubular portion 5, so that the water that exits from the outer holes 25 affects the outer surfaces of the tubular portion 5 and of the mixing chamber 3, for complete washing of the device at the end of the dispensing operation.

The manifold body 6 comprises, in a lower region, longitudinal partitions 26 that pass partially through the annular duct 12.

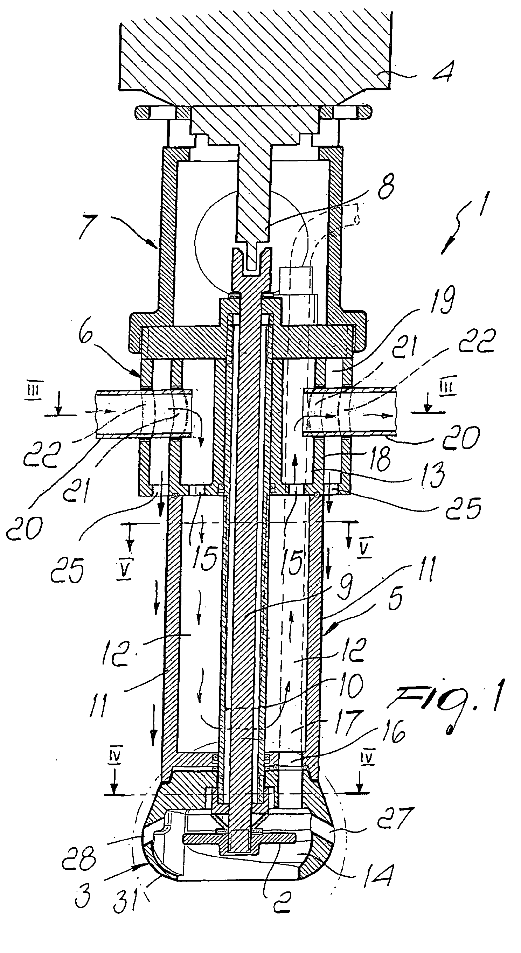

In this manner, hot water is sent through one of the tubes 20, the left one with reference to Figure 1, so that it circulates within the annular duct 12 and exits through the other tube 20, the right one with reference to Figure 1. This water circulation is useful to bring the system to temperature in a short time.

The presence of the partitions 26, extending along almost the entire height of the annular chamber 12, facilitates the complete circulation of the water along the entire chamber, preventing the water from flowing directly toward the exit tube and forcing it to descend to the bottom of the annular chamber 12.

The impeller cavity 14 comprises at least one inclined passage, in the specific case two passages, designated by the reference numerals 27 and 28, which are substantially radial and connect the impeller chamber 14 to the outer surface of the mixing chamber 3 and the contents of the cup 32.

The device 1 is associated with a frame, shown only schematically and designated by the reference numeral 34 in the figures, which allows the device to move vertically between at least one raised position, shown in Figures 12 and 14, in which the device is external to the cup 32, and at least one internal position, shown in Figure 13, in which the device is inside the cup.

A baffle means 35 is pivoted to the frame 34 so as to form at least two positions: a position that is coaxial to the device, shown in Figures 12 and 14, and a rotated position, shown in Figure 13, to allow the device 1 to be inserted in the cup 32.

The baffle means 35 is substantially constituted by a cup that has a radial opening 36 to allow to send the washing water that arrives from the device into the cup tangentially, as shown in Figure 12.

The operation of the device according to the invention is as follows.

The mixing device 1 is inserted in the cup so that the mixing chamber 3 is close to the bottom of the cup, and water is introduced through the tube 17.

The motor 4 drives the impeller 2, which mixes, with a vortex-producing action, the preparation and the water contained in the impeller cavity, while other water is introduced through the tube 17 and the delivery tubes 23.

The impeller 2 aspirates the mixture of preparation and water from the lower opening 29 of the mixing chamber 3 and expels it from the lateral openings or from the passages 27 and 28, mixing or whisking the beverage until the device 1 is lifted, and when the chamber 3 is beyond the upper level of the liquid contained in the cup, a final amount of water is introduced to complete the filling of the cup.

The final amount of water completely washes the device, which is ready to dispense another beverage.

To wash the device, the final amount of water is introduced through the tube 17 and the second delivery tubes 23, so that the water introduced in the outer annular chamber 19 exits from the outer longitudinal holes 25 to strike the outer surface of the tubular portion 5 and of the mixing chamber 3. A certain final amount of water, moreover, is fed to the tube 17 for the complete washing of the impeller cavity and of the impeller itself.

The device is washed in the raised position, shown in Figures 12 and 14, and the water that arrives from washing is sent into the cup 32 through the radial opening 36 of the baffle 35, so that the water does not fall onto the entire surface of the content but only on the edges.

In this manner, the washing water, which contributes to the completion of the beverage, does not interfere in any manner with the froth previously formed by the action of the device.

Sanitization of the device is provided periodically.

In practice it has been found that the invention achieves the intended aim and objects, a mixing device having been provided which allows to form a dense and creamy froth that, in the case of coffee, is similar to the froth obtained with espresso machines.

An important advantage of the invention is the fact that the vapors do not make contact with the units for dispensing and distributing the soluble preparation, preventing their clogging or the alteration of the product.

The mixing device according to the invention is susceptible of numerous modifications and variations, within the scope of the appended claims. All the details may further be replaced with technically equivalent elements.

The materials used, as well as the dimensions, may of course be any according to requirements and to the state of the art.

## Claims

1. A mixing device, particularly for beverage dispensing machines, **characterized in that** it comprises a motorized impeller contained inside a mixing chamber that is part of an elongated body adapted to be inserted in a cup in order to dispense and mix the beverage.

2. The mixing device according to claim 1, **characterized in that** said elongated body is constituted by a tubular portion that is provided with the mixing chamber in its lower end and is associated with a manifold member, said manifold member being rigidly coupled to a tubular support that receives the shaft of a motor that is rigidly coupled to said elongated body.

3. The mixing device according to claim 2, **characterized in that** said motor shaft meshes with a transmission shaft that is supported inside a hollow support that runs from said manifold to said chamber inside which the transmission shaft is fixed to said impeller.

4. The mixing device according to one or more of the preceding claims, **characterized in that** said inner annular chamber of the manifold is connected to said annular duct by way of longitudinal holes formed in the lower wall of the manifold.

5. The mixing device according to one or more of the preceding claims, **characterized in that** it comprises a cylindrical partition that divides said manifold into two chambers: said inner annular chamber and an outer annular chamber, which is coaxial to the inner annular chamber.

6. The mixing device according to one or more of the preceding claims, **characterized in that** said manifold has two first delivery tubes inserted in radial holes, formed respectively in the outer wall of the manifold and in the cylindrical partition, in order to supply water to the inner annular chamber.

7. The mixing device according to one or more of the preceding claims, **characterized in that** said manifold has two second delivery tubes inserted in radial holes, formed in the cylindrical partition, in order to supply water to said outer annular chamber.

8. The mixing device according to one or more of the preceding claims, **characterized in that** the lower wall of the manifold has a plurality of outer longitudinal holes, which connect the outer annular chamber to the outer surface of the tubular portion so that the water that exits from the outer holes strikes the outer surfaces of said tubular portion and of the mixing chamber.

9. The mixing device according to one or more of the preceding claims, **characterized in that** it comprises temperature control means that are adapted to bring the system to temperature in a short time.

10. The mixing device according to one or more of the preceding claims, **characterized in that** said temperature control means comprise said inner annular chamber, supplied by said first tubes for sending water into said annular duct by means of longitudinal holes formed in the lower wall of the manifold.

11. The mixing device according to one or more of the preceding claims, **characterized in that** said manifold body comprises, in a lower region, longitudinal partitions that pass through the annular duct, said partitions, which run along almost the entire height of the annular chamber, being suitable to facilitate the full circulation of the water along the entire chamber, preventing the water from flowing directly toward the exit tube and forcing it to descend to the bottom of the annular chamber.

12. The mixing device according to one or more of the preceding claims, **characterized in that** said impeller cavity comprises at least one substantially radial inclined passage, which connects said impeller chamber to the outer surface of said mixing chamber and the content of the cup.

13. The mixing device according to one or more of the preceding claims, **characterized in that** it is associated with a frame so as to move in a vertical direction between at least one raised position, in which the device is external to the cup, and at least one inner position, in which the device is located inside the cup.

14. The mixing device according to one or more of the preceding claims, **characterized in that** it comprises a baffle means, which is pivoted to the frame so as to form at least two positions: a position that is coaxial to the device and a position that is rotated to allow the device to be inserted in the cup.

15. The mixing device according to one or more of the preceding claims, **characterized in that** said baffle means is constituted by a cup that is provided with a radial opening in order to allow to send the washing water that arrives from the device into the cup tangentially.
